# FASCICULE DE BREVET EUROPEEN

(11) **EP 2 286 526 B1**
(45) Date de publication et mention de la délivrance du brevet: **01.02.2012**
(21) Numéro de dépôt: 09745737.8
(22) Date de dépôt: 12.05.2009
(51) Int. Cl.: H04B 17/00

(54) **PROCEDE ET DISPOSITIF DE PREVENTION DE DEFAILLANCE**
VERFAHREN UND EINRICHTUNG ZUR VERHINDERUNG VON FEHLSCHLÄGEN
METHOD AND DEVICE FOR PREVENTING FAILURE

(30) Priorité: 16.05.2008 FR 0802715
(43) Date de publication de la demande: 23.02.2011
(73) Titulaire: Trustseed, 78490 Galluis (FR)
(72) Inventeur: BLOT LEFEVRE, Eric, F-92200 Neuilly-sur-seine (FR)
(74) Mandataire: Nguyen Van Yen, Christian
(86) Numéro de dépôt international: PCT/EP2009/055726
(87) Numéro de publication internationale: WO 2009/138405

(56) Documents cités:
- EP-A- 1 944 902
- FR-A- 2 881 901
- US-A1- 2003 050 015
- US-A1- 2005 163 047
- US-A1- 2006 019 651

## Description

La présente invention concerne un procédé et un dispositif de suivi d'évolution d'une grandeur physique. Elle s'applique, en particulier, au suivi d'évolution de délais de transmission de valeurs numériques depuis une entité, délais mesurés entre le moment où la transmission est requise et le moment où elle est effectivement réalisée.

La détection de risques de suspension de transmissions de valeurs numériques en provenance d'une entité est actuellement trop lente au regard des besoins des utilisateurs. En d'autres termes, la suspension a généralement déjà eu lieu quand les systèmes informatiques concernés la détectent.

La présente invention vise à remédier à ces inconvénients.

A cet effet, selon un premier aspect, la présente invention vise un procédé de suivi d'évolution d'une grandeur physique caractérisé en ce qu'il comporte :
- une étape de mémorisation d'une pluralité de dates de transmissions de valeurs numériques requises par des requêtes émises par des entités dites « requérantes » à destination de la même entité dite « émettrice » de valeurs numériques,
- pour chaque dite transmission effectivement réalisée à la suite d'une dite requête, une étape de mémorisation de la date de transmission et une étape (220) de détermination de délai entre la date de la transmission effective et la date de transmission requise correspondante,
- pendant chacune d'une pluralité de durées prédéterminées, une étape (228) de détermination d'une grandeur statistique représentative des dits délais,
- une étape de détermination d'évolution de ladite grandeur statistique entre au moins deux des dites durées prédéterminées et
- une étape de comparaison de ladite évolution avec une valeur limite prédéterminée.

Grâce à ces dispositions, on peut détecter un risque de perturbation ou de suspension de transmission des la part de ladite entité, avant qu'elle ne se produise. Par exemple, les risques de défaillances concernent des valeurs numériques destinées à des actionneurs de systèmes physiques ou des transferts de valeurs monétaires.

Selon des caractéristiques particulières, au cours de l'étape de mémorisation d'une pluralité de dates de transmissions requises, on mémorise chaque date requise par une pluralité d'entités « requérantes » à destination de la même entité « émettrice ».

Ainsi, la mise en oeuvre de la présente invention ne nécessite pas de mémoriser toutes les dates de requêtes émises à destination de l'entité émettrice. On simplifie ainsi cette mise en oeuvre.

Selon des caractéristiques particulières, au cours de l'étape de détermination d'une grandeur statistique représentative des dits délais, on détermine une moyenne, pour une dite durée prédéterminée, des délais déterminés au cours de l'étape de détermination de délai.

La grandeur statistique est donc très aisée à déterminer.

Selon des caractéristiques particulières, au cours de l'étape de détermination d'une grandeur statistique représentative des dits délais, la grandeur statistique est pondérée en fonction de la valeur numérique correspondant à la requête.

On tient ainsi compte de l'importance des valeurs numériques dans la détermination de la grandeur statistique dans la détermination du risque de suspension.

Selon des caractéristiques particulières, au cours de l'étape de comparaison de ladite évolution avec une valeur limite prédéterminée, ladite valeur limite prédéterminée dépend de l'évolution passée de ladite grandeur statistique.

Ainsi, un profil d'évolution plus complexe qu'une simple évolution locale peut être pris en compte.

Selon des caractéristiques particulières, si ladite évolution est supérieure à la valeur limite prédéterminée, on effectue une étape d'émission d'un message d'alarme à destination de chaque entité émettrice ayant effectué une requête dont la date a été mémorisée au cours de l'étape de mémorisation de dates de requêtes.

Les entités requérantes peuvent ainsi prendre des mesures de limitation d'influence du risque, par exemple en limitant les valeurs numériques objets des requêtes ou le délai requis pour leurs transmissions.

Selon un deuxième aspect, la présente invention vise un dispositif de suivi d'évolution d'une grandeur physique caractérisé en ce qu'il comporte :
- un moyen de mémorisation d'une pluralité de dates de transmissions de valeurs numériques requises par des requêtes émises par des entités dites « requérantes » à destination de la même entité dite « émettrice » de valeurs numériques,
- un moyen de mémorisation de la date de transmission de chaque dite transmission effectivement réalisée à la suite d'une dite requête,
- un moyen de détermination de délai entre la date de la transmission effective et la date de transmission requise correspondante,
- un moyen de détermination d'une grandeur statistique représentative des dits délais, pendant chacune d'une pluralité de durées prédéterminées,
- un moyen de détermination d'évolution de ladite grandeur statistique entre au moins deux des dites durées prédéterminées et
- un moyen de comparaison de ladite évolution avec une valeur limite prédéterminée.

Selon un troisième aspect, la présente invention vise un programme informatique, caractérisé en ce qu'il comporte des instructions adaptées, une fois mises en oeuvre par un système informatique, à implémenter le procédé objet de la présente invention, tel que succinctement exposé ci-dessus.

Les avantages, buts et caractéristiques particulières de ce dispositif et de ce programme informatique étant similaires à ceux du procédé objet de la présente invention, tel que succinctement exposé ci-dessus, ils ne sont pas rappelés ici.

D'autres avantages, buts et caractéristiques de la présente invention ressortiront de la description qui va suivre, faite, dans un but explicatif et nullement limitatif en regard des dessins annexés, dans lesquels :
- la figure 1 représente schématiquement un mode de réalisation particulier du dispositif objet de la présente invention et
- la figure 2 représente, sous forme d'un logigramme, des étapes mises en oeuvre dans un mode de réalisation particulier du procédé objet de la présente invention.

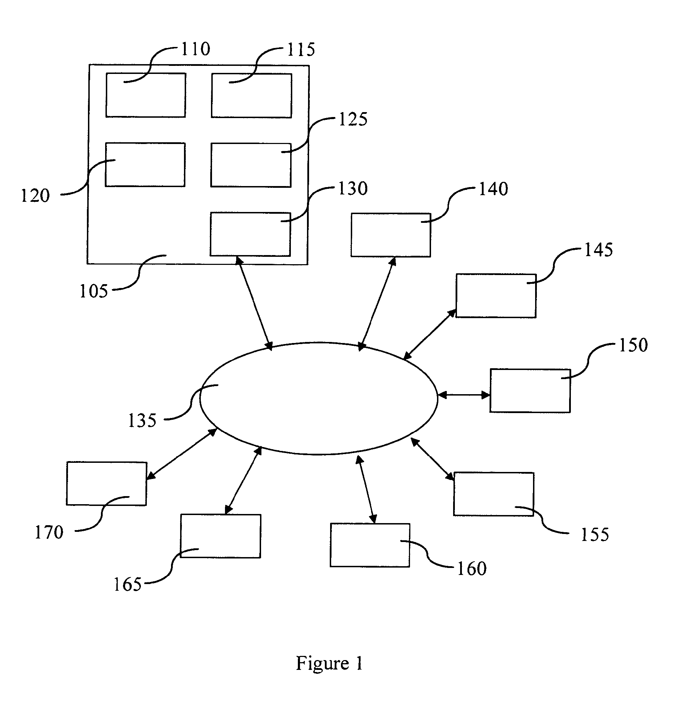

On observe, en figure 1, un dispositif 105 comportant une unité centrale 110, une mémoire non volatile 115, une mémoire vive 120, un lecteur de support de données 125 et un moyen d'accès 130 à un réseau 135. Des systèmes informatiques requérants 140, 145 et 150, des systèmes informatiques émetteurs 155 et 160 et des systèmes informatiques destinataires 165 et 170 sont reliés au réseau 135.

Le dispositif 105 prend, ici, la forme d'un ordinateur, par exemple un serveur. L'unité centrale 110, la mémoire non volatile 115, la mémoire vive 120, le lecteur de support de données 125 et le moyen d'accès 130 au réseau 135 sont de type connu. En particulier, le lecteur de support de données 125, par exemple d'un support de données prenant la forme de disques compacts ou de « clés » connectables à un port (non représenté) du dispositif 105, est adapté, sous le contrôle de l'unité centrale 110, à transférer des données et des instructions de programmes depuis le support de données en mémoire non volatile 115.

Le réseau 135 est, par exemple, le réseau Internet.

Les systèmes informatiques 140 à 170 sont de type connu, par exemple des serveurs.

Les systèmes informatiques 140, 145 et 150 sont dits « requérants » parce qu'ils émettent des requêtes à destination d'au moins un système informatique émetteur. Les systèmes informatiques 155 et 160 sont dits « émetteurs » parce qu'ils émettent des messages comportant des valeurs numériques requises par les requêtes, à destination d'au moins un système informatique « destinataires » 165 et 170.

On rappelle qu'un des buts de la présente invention est d'estimer un risque de défaillance de transmission de valeurs numériques par les systèmes informatiques émetteurs 155 et 160 avant que cette défaillance ne survienne. Par exemple, les risques de défaillance concernent un système informatique émetteur de valeurs numériques destinées à des actionneurs de systèmes physiques, agricoles, industriels, d'infrastructures, de bureau ou domestiques, ou des transferts de valeurs monétaires. On rappelle que la défaillance peut provenir de nombreux facteurs, techniques, en particulier une surcharge de données ou de processus à traitées ou la présence d'un virus ou d'un autre logiciel malveillant humains ou automatiques, notamment en cas de faiblesse de ressources requises disponibles.

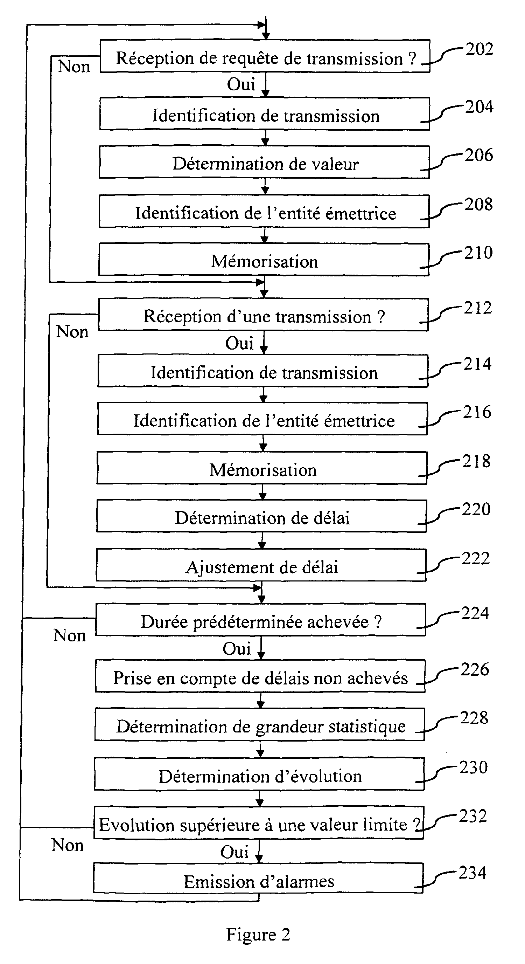

Le dispositif 105, en mettant en oeuvre des instructions de programme informatique conservées en mémoire non volatile, implémente les étapes illustrées en figure 2.

Au moins une partie des systèmes informatiques requérants (ici pour les systèmes informatiques 140 et 145), émettent un message à destination du dispositif 105 lors de la transmission de chaque requête à destination de l'un des systèmes émetteurs 155 et 160, ledit message identifiant une transmission de valeur numérique requise. De même, les systèmes informatiques destinataires 165 et 170 émettent un message à destination du dispositif 105 lors de la réception d'une valeur numérique correspondant à une requête, ledit message identifiant une réception de valeur numérique.

Comme illustré en figure 2, dans un mode de réalisation particulier du procédé objet de la présente invention, au cours d'une étape 202, le dispositif 105 détermine s'il a reçu un message identifiant une requête émise par un système informatique requérant à destination d'un système informatique émetteur. Sinon, il passe à une étape 212. Si oui, au cours d'une étape 204, le dispositif 105 identifie une transmission de valeur requise. Au cours d'une étape 206, le dispositif 105 détermine une valeur numérique requise. Au cours d'une étape 208, le dispositif 105 identifie un système informatique émetteur destinataire de la requête.

Au cours d'une étape 210 le dispositif 105 détermine une date requise de transmission de la valeur numérique. Par exemple, le dispositif 105 possède, pour chaque couple de dispositifs requérant et émetteur, un délai fixe, qu'il ajoute à la date courante. Selon un autre exemple, le dispositif 105 détermine, dans le message reçu du système informatique requérant, un délai de transmission requis, qu'il ajoute à la date courante ou une date de transmission requise. La construction de tels messages est de type connu de l'homme du métier, en mettant en oeuvre une structure de message comportant plusieurs champs prédéterminés.

Au cours d'une étape 210, le dispositif 105 mémorise la date courante, l'identification de la transmission de valeur requise, la valeur numérique requise, le système informatique émetteur destinataire de la requête et la date requise de transmission de la valeur numérique.

Au cours d'une étape 212, le dispositif 105 détermine si une transmission requise a été effectuée, en fonction d'au moins un message provenant d'un système informatique destinataire 165 et 170. Sinon, le dispositif 105 passe à une étape 224. Si oui, au cours d'une étape 214, le dispositif 105 identifie la transmission de valeur requise concernée. Au cours d'une étape 216, le dispositif 105 identifie le système informatique émetteur qui a transmis la valeur numérique.

Au cours d'une étape 218, le dispositif 105 mémorise la date courante, l'identification de la transmission de valeur requise et l'identification du système informatique émetteur.

Au cours d'une étape 220, le dispositif 105 détermine un délai entre la date de transmission requise et la date courante et l'associe, en mémoire, avec l'identification de la valeur numérique et l'identification du système informatique émetteur.

Au cours d'une étape 222, le dispositif 105 décompte un éventuel délai dû à une inactivité normale de l'émetteur, en fonction de connaissances mémorisées de périodes d'inactivité. Par exemple, si le système informatique émetteur ou le système informatique destinataire est inactif chaque nuit, d'une heure à une autre, par exemple pour maintenance, mise à jour, sauvegarde de données, travail d'un programme de détection et/ou d'élimination de logiciels malveillants ou réinitialisation, que la date requise de transmission correspondait à une nuit et que la date courante se trouve dans les premières minutes de la nouvelle journée, le délai entre la date requise et la date courante est considéré comme nul. De même, si le système informatique émetteur ou le système informatique destinataire est inactif pendant les fins de semaines, jours fériés et certains ponts, le délai courant entre la date requise de transmission et la fin de la période d'inactivité est décompté si la transmission a lieu en fin de période d'inactivité.

Au cours d'une étape 224, le dispositif 105 détermine si une durée prédéterminée est achevée. Par exemple, chaque durée prédéterminée correspond à une minute ou à un mois. Sinon, le dispositif 105 retourne à l'étape 202. Si oui, au cours d'une étape 226, le dispositif affecte, à chaque transmission dont la date de transmission requise est passée, la date courante comme date de transmission et détermine le délai entre ces deux dates comme exposé en regard des étapes 220 et 222.

Au cours d'une étape 228, le dispositif 105 détermine au moins une valeur de grandeur statistique représentative de chaque délai déterminé au cours des étapes 220, 222 et 226. Par exemple une grandeur statistique est une moyenne des délais. Par exemple, une grandeur statistique est une moyenne des délais pondérés par les valeurs numériques requises.

Au cours d'une étape 230, le dispositif 105 détermine une évolution, sur au moins deux durée prédéterminées, des valeurs de chaque grandeur statistique.

Au cours d'une étape 232, le dispositif 105 compare ladite évolution à une valeur limite prédéterminée et détermine si l'évolution est supérieure à ladite valeur limite prédéterminée. Par exemple la valeur limite prédéterminée est égale à un quart, un tiers ou la moitié de la durée séparant le milieu de chaque durée prédéterminée. Par exemple, si chaque durée prédéterminée couvre un mois et est décalée de quinze jours de la durée prédéterminée précédente, la valeur limite prédéterminée est, dans ces exemples, respectivement égale à 3,75 jours, 5 jours ou 7,5 jours. Dans des variantes, au moins une valeur limite prédéterminée est fonction d'au moins une évolution passée de la grandeur physique. Par exemple, si au mois d'août de chaque année, l'évolution de la valeur de la grandeur physique est de + cinq jours, la valeur limite prédéterminée est, pour le mois d'août, augmentée d'une fraction de ces cinq jours, par exemple 2,5 jours.

Selon un autre exemple, si la moyenne des évolutions positives pour une durée prédéterminée, par exemple un an, est de deux jours, on fixe comme valeur limite une valeur supérieure au double ou au triple de cette moyenne, par exemple à quatre ou six jours.

Dans des variantes, on tient compte de la valeur de la grandeur statistique et on ne compare son évolution à la valeur limite que si cette valeur est supérieure à une autre valeur limite, par exemple « 2 jours ». Ainsi, on ne déclenche pas d'alarme si le retard constaté est dans la moyenne sur une période prédéterminée, par exemple un an ou dans une proportion limitée.

Si le résultat de l'étape 232 est négatif, on retourne à l'étape 202. Si le résultat de l'étape 232 est positif, au cours d'une étape 234, le dispositif 105 émet un message d'alarme à destination de chacun des systèmes informatiques requérants. Puis, le dispositif 105 retourne à l'étape 202.

## Revendications

1. Procédé de suivi d'évolution d'une grandeur physique **caractérisé en ce qu'**il comprend :
- une étape (210) de mémorisation d'une pluralité de dates de transmissions de valeurs numériques requises par des requêtes émises par des entités dites « requérantes » à destination de la même entité dite « émettrice » de valeurs numériques,
- pour chaque dite transmission effectivement réalisée à la suite d'une dite requête, une étape (218) de mémorisation de la date de transmission et une étape (220) de détermination de délai entre la date de la transmission effective et la date de transmission requise correspondante,
- pendant chacune d'une pluralité de durées prédéterminées, une étape (228) de détermination d'une grandeur statistique représentative desdits délais,
- une étape (230) de détermination d'évolution de ladite grandeur statistique entre au moins deux des dites durées prédéterminées et
- une étape (232) de comparaison de ladite évolution avec une valeur limite prédéterminée.

2. Procédé selon la revendication 1, **caractérisé en ce que**, au cours de l'étape (210) de mémorisation d'une pluralité de dates de transmissions requises, on mémorise chaque date requise par une pluralité d'entités « requérantes » à destination de la même entité « émettrice ».

3. Procédé selon l'une quelconque des revendications 1 ou 2, **caractérisé en ce que**, au cours de l'étape (228) de détermination d'une grandeur statistique représentative des dits délais, on détermine une moyenne, pour une dite durée prédéterminée, des délais déterminés au cours de l'étape de détermination de délai.

4. Procédé selon l'une quelconque des revendications 1 à 3, **caractérisé en ce que**, au cours de l'étape (228) de détermination d'une grandeur statistique représentative des dits délais, la grandeur statistique est pondérée en fonction de la valeur numérique correspondant à la requête.

5. Procédé selon l'une quelconque des revendications 1 à 4, **caractérisé en ce que**, au cours de l'étape (232) de comparaison de ladite évolution avec une valeur limite prédéterminée, ladite valeur limite prédéterminée dépend de l'évolution passée de ladite grandeur statistique.

6. Procédé selon l'une quelconque des revendications 1 à 5, **caractérisé en ce que**, si ladite évolution est supérieure à la valeur limite prédéterminée, on effectue une étape (234) d'émission d'un message d'alarme à destination de chaque entité émettrice ayant effectué une requête dont la date a été mémorisée au cours de l'étape (210) de mémorisation de dates de requêtes.

7. Dispositif (105) de suivi d'évolution d'une grandeur physique **caractérisé en ce qu'**il comprend :
- un moyen (110, 115, 120) de mémorisation d'une pluralité de dates de transmissions de valeurs numériques requises par des requêtes émises par des entités dites « requérantes » (140, 145, 150) à destination de la même entité dite « émettrice » (155, 160) de valeurs numériques,
- un moyen (110, 115, 120) de mémorisation de la date de transmission de chaque dite transmission effectivement réalisée à la suite d'une dite requête,
- un moyen (110, 115, 120) de détermination de délai entre la date de la transmission effective et la date de transmission requise correspondante,
- un moyen (110, 115, 120) de détermination d'une grandeur statistique représentative des dits délais, pendant chacune d'une pluralité de durées prédéterminées,
- un moyen (110, 115, 120) de détermination d'évolution de ladite grandeur statistique entre au moins deux des dites durées prédéterminées et
- un moyen de comparaison de ladite évolution avec une valeur limite prédéterminée.

8. Programme informatique, **caractérisé en ce qu'**il comprend des instructions adaptées, une fois mises en oeuvre par un système informatique (105), à implémenter le procédé objet de l'une quelconque des revendications 1 à 6.

## Claims

1. A method for monitoring the evolution of a physical magnitude, **characterised in that** it comprises:
- a step (210) of storing a plurality of dates of transmissions of digital values requested via requests emitted by so called "requesting" entities destined for the same so called "emitting" entity of digital values,
- a step (218) of storing the transmission date, for each of said transmissions actually undertaken following one of said requests, and a step (220) of determining the delay between the date of actual transmission and the corresponding requested transmission date,
- a step (228) of determining a statistical magnitude representative of said delays during each of a plurality of predetermined durations,
- a step (230) of determining the progression of said statistical magnitude between at least two of said predetermined durations and
- a step (232) of comparing said progression with a predetermined limit value.

2. The method according to claim 1, **characterised in that**, during the step (210) of storing a plurality of requested transmission dates, each requested date is stored by a plurality of "requesting" entities destined for the same "emitting" entity.

3. The method according to any one of claims 1 or 2, **characterised in that**, during the step (228) of determining a statistical magnitude representative of said delays, an average for one of said predetermined durations is determined for the delays determined during the step of determining the delay.

4. The method according to any one of claims 1 to 3, **characterised in that**, during the step (228) of determining a statistical magnitude representative of said delays, the statistical magnitude is weighted as a function of the digital value corresponding to the request.

5. The method according to any one of claims 1 to 4, **characterised in that** during the step (232) of comparing said evolution with a predetermined limit value, said predetermined limit value depends on the past progression of said statistical magnitude.

6. The method according to any one of claims 1 to 5, **characterised in that**, if said progression is greater than the predetermined limit value, a step (234) of emitting a warning message is undertaken, which step is destined for each emitting entity that performed a request for which the date was stored during the step (210) of storing request dates.

7. A device (105) for monitoring the progression of a physical magnitude, **characterised in that** it comprises:
- means (110, 115, 120) for storing a plurality of dates of transmissions of digital values requested via requests emitted by so called "requesting" entities (140, 145, 150) destined for the same so called "emitting" entity (155, 160) of digital values,
- means (110, 115, 120) for storing the transmission date of each of said transmissions effectively undertaken following one of said requests,
- means (110, 115, 120) for determining the delay between the date of effective transmission and the corresponding requested transmission date,
- means (110, 115, 120) for determining a statistical magnitude representative of said delays during each of a plurality of predetermined durations,
- means (110, 115, 120) for determining the progression of said physical magnitude between at least two of said predetermined durations and
- means for comparing said progression with a predetermined limit value.

8. A computer program, **characterised in that** it comprises instructions that are designed, when executed by a computer system (105), for implementing the method that is the object of any one of claims 1 to 6.

## Patentansprüche

1. Verfahren zum Überwachen der Entwicklung einer physikalischen Größe, **dadurch gekennzeichnet**, das es Folgendes beinhaltet:
- einen Schritt (210) des Speicherns mehrerer Daten von Übertragungen digitaler Werte, die mit von sogenannten "anfordernden" Entitäten gesendeten Anforderungen angefordert wurden, zu derselben "sendenden" Entität von digitalen Werten,
- einen Schritt (218) des Speicherns des Übertragungsdatums für jede der tatsächlich nach einer Anforderung erfolgten Übertragungen und einen Schritt (220) des Ermittelns der Verzögerung zwischen dem Datum der tatsächlichen Übertragung und dem entsprechenden angeforderten Übertragungsdatum,
- einen Schritt (228) des Ermittelns einer für die Verzögerungen repräsentativen statistischen Größe während jeder von mehreren vorbestimmten Dauern,
- einen Schritt (230) des Ermittelns der Entwicklung der statistischen Größe zwischen wenigstens zwei der vorbestimmten Dauern, und
- einen Schritt (232) des Vergleichens der Entwicklung mit einem vorbestimmten Grenzwert.

2. Verfahren nach Anspruch 1, **dadurch gekennzeichnet, dass** im Laufe des Schrittes (210) des Speicherns mehrerer angeforderter Übertragungsdaten jedes angeforderte Datum von mehreren "anfordernden" Entitäten gespeichert wird, zu derselben "sendenden" Entität.

3. Verfahren nach Anspruch 1 oder 2, **dadurch gekennzeichnet, dass** im Laufe des Schrittes (228) des Ermittelns einer für die Verzögerungen repräsentativen statistischen Größe ein Mittelwert, für eine vorbestimmte Dauer, für die im Laufe des Verzögerungsermittlungsschrittes ermittelten Verzögerungen ermittelt wird.

4. Verfahren nach einem der Ansprüche 1 bis 3, **dadurch gekennzeichnet, dass** im Laufe des Schrittes (228) des Ermittelns einer für die Verzögerungen repräsentativen statistischen Größe die statistische Größe in Abhängigkeit von dem der Anforderung entsprechenden digitalen Wert gewichtet wird.

5. Verfahren nach einem der Ansprüche 1 bis 4, **dadurch gekennzeichnet, dass** im Laufe des Schrittes (232) des Vergleichens der Entwicklung mit einem vorbestimmten Grenzwert dieser vorbestimmte Grenzwert von der vergangenen Entwicklung der statistischen Größe abhängt.

6. Verfahren nach einem der Ansprüche 1 bis 5, **dadurch gekennzeichnet, dass**, wenn die Entwicklung größer ist als der vorbestimmte Grenzwert, ein Schritt (234) des Sendens einer Alarmmeldung zu jeder sendenden Entität erfolgt, die eine Anforderung durchgeführt hat, für die das Datum im Laufe des Schrittes (210) des Speicherns von Anforderungsdaten gespeichert wurde.

7. Vorrichtung (105) zum Überwachen der Entwicklung einer physikalischen Größe, **dadurch gekennzeichnet, dass** sie Folgendes umfasst:
- ein Mittel (110, 115, 120) zum Speichern mehrerer Daten von Übertragungen digitaler Werte, die mit von sogenannten "anfordernden" Entitäten (140, 145, 150) gesendeten Anforderungen angefordert wurden, zu derselben sogenannten "sendenden" Entität (155, 160) von digitalen Werten,
- ein Mittel (110, 115, 120) zum Speichern des Übertragungsdatums jeder der nach einer Anforderung tatsächlich erfolgten Übertragungen,
- ein Mittel (110, 115, 120) zum Ermitteln der Verzögerung zwischen dem Datum der tatsächlichen Übertragung und dem entsprechenden angeforderten Übertragungsdatum,
- ein Mittel (110, 115, 120) zum Ermitteln einer statistischen Größe, die für die Verzögerungen bei jeder von mehreren vorbestimmten Dauern repräsentativ ist,
- ein Mittel (110, 115, 120) zum Ermitteln der Entwicklung der physikalischen Größe zwischen wenigstens zwei der vorbestimmten Dauern, und
- ein Mittel zum Vergleichen der Entwicklung mit einem vorbestimmten Grenzwert.

8. Computerprogramm, **dadurch gekennzeichnet, dass** es Befehle umfasst, die bei Ausführung durch ein Computersystem (105 )zum Ausführen des Verfahrens ausgelegt ist, das Gegenstand eines der Ansprüche 1 bis 6 ist.
